# EUROPEAN PATENT APPLICATION

(11) **EP 4 373 182 A1**
(43) Date of publication of application: **22.05.2024**
(21) Application number: 21949556.1
(22) Date of filing: 12.07.2021
(51) Int. Cl.: H04W 72/04

(54) **WIRELESS COMMUNICATION METHOD, TERMINAL DEVICE, AND COMMUNICATION DEVICE**

(71) Applicant: GUANGDONG OPPO MOBILE TELECOMMUNICATIONS CORP., LTD., Dongguan, Guangdong 523860 (CN)
(72) Inventor: XU, Weijie, Dongguan, Guangdong 523860 (CN); ZUO, Zhisong, Dongguan, Guangdong 523860 (CN); HE, Chuanfeng, Dongguan, Guangdong 523860 (CN); CUI, Shengjiang, Dongguan, Guangdong 523860 (CN); HU, Rongyi, Dongguan, Guangdong 523860 (CN); ZHANG, Zhi, Dongguan, Guangdong 523860 (CN)
(74) Representative: Ipside
(86) International application number: PCT/CN2021/105723
(87) International publication number: WO 2023/283758

(57) **Abstract**

Embodiments of the present application provide a wireless communication method, a terminal device, and a communication device. The method comprises: determining a type or terminal group to which a terminal device belongs; sending a backscattered signal on the basis of a transmission resource, fallback parameter, or time unit corresponding to the type or terminal group to which the terminal device belongs. In the present application, different transmission resources, fallback parameters, or time units are designed for terminal devices of different types or different groups, such that resource conflicts between the terminal devices of different types or different groups can be avoided, and the reliability of data transmission is improved. In particular, for an energy-constrained terminal device such as a terminal device that requires energy collection and storage between communications and is far away from a network device, the energy collected or stored by the terminal device can be saved and the energy utilization efficiency is improved, such that energy requirements during communication can be met.

## Description

### TECHNICAL FIELD

Embodiments of the disclosure relate to the field of communications, and more specifically, to wireless communication methods, a terminal device and a communication device.

### BACKGROUND

When a semi-passive zero-power-consumption terminal is far from a network node, charging efficiency is reduced greatly. Energy harvested in real time is unable to meet instant communication requirements, that is, the energy needs to be harvested and stored before communication. Therefore, for such terminals, how to save the harvested energy to meet energy requirements during communication is an urgent technical problem to be solved in the art.

### SUMMARY

Embodiments of the disclosure provide wireless communication methods, a terminal device and a communication device, which are able to save energy harvested by a terminal device and improve the utilization efficiency of the energy, thereby meeting energy requirements during communication.

According to a first aspect, the disclosure provides a wireless communication method, which includes the following operations.

A type or terminal group to which a terminal device belongs is determined.

A backscatter signal is sent based on a transmission resource, a backoff parameter or a time unit corresponding to the type or terminal group to which the terminal device belongs.

According to a second aspect, the disclosure provides a wireless communication method, which includes the following operation.

Scheduling information or a backoff parameter is sent based on a first type and a second type or based on a first terminal group and a second terminal group, where the scheduling information or the backoff parameter is used for a terminal device to send a backscatter signal based on a transmission resource, the backoff parameter or a time unit corresponding to a type or terminal group to which the terminal device belongs.

According to a third aspect, the disclosure provides a terminal device. The terminal device is configured to perform the method described in the first aspect or each implementation thereof. Specifically, the terminal device includes a functional module that is configured to perform the method described in the first aspect or each implementation thereof.

In an implementation, the terminal device may include a processing unit. The processing unit is configured to perform functions related to information processing. For example, the processing unit may be a processor.

In an implementation, the terminal device may include a sending unit and/or a receiving unit. The sending unit is configured to perform functions related to sending; and the receiving unit is configured to perform functions related to receiving. For example, the sending unit may be a transmitter; and the receiving unit may be a receiver. For another example, the terminal device is a communication chip; the sending unit may be an input circuit or interface of the communication chip; and the receiving unit may be an output circuit or interface of the communication chip.

According to a fourth aspect, the disclosure provides a communication device. The communication device is configured to perform the method described in the second aspect or each implementation thereof. Specifically, the communication device includes a functional module that is configured to perform the method described in the second aspect or each implementation thereof.

In an implementation, the communication device may include a processing unit. The processing unit is configured to perform functions related to information processing. For example, the processing unit may be a processor.

In an implementation, the communication device may include a sending unit and/or a receiving unit. The sending unit is configured to perform functions related to sending; and the receiving unit is configured to perform functions related to receiving. For example, the sending unit may be a transmitter; and the receiving unit may be a receiver. For another example, the communication device is a communication chip; the receiving unit may be an input circuit or interface of the communication chip; and the sending unit may be an output circuit or interface of the communication chip.

According to a fifth aspect, the disclosure provides a terminal device, which includes a processor and a memory. The memory is configured to store a computer program. The processor is configured to invoke and run the computer program stored in the memory, so as to perform the method described in the first aspect or each implementation thereof.

In an implementation, there are one or more processors, and there are one or more memories.

In an implementation, the memories are integrated with the processors, or the memories are separated from the processors.

In an implementation, the terminal device further includes a transmitter and a receiver.

According to a sixth aspect, the disclosure provides a communication device, which includes a processor and a memory. The memory is configured to store a computer program. The processor is configured to invoke and run the computer program stored in the memory, so as to perform the method described in the second aspect or each implementation thereof.

In an implementation, there are one or more processors, and there are one or more memories.

In an implementation, the memories are integrated with the processors, or the memories are separated from the processors.

In an implementation, the communication device further includes a transmitter and a receiver.

According to a seventh aspect, the disclosure provides a chip. The chip is configured to implement the method described in any one of the first aspect to the second aspect or each implementation thereof. Specifically, the chip includes: a processor, configured to invoke and run a computer program from a memory, to enable a device having the chip mounted to perform the method described in any one of the first aspect to the second aspect or each implementation thereof.

According to an eighth aspect, the disclosure provides a computer-readable storage medium. The computer-readable storage medium is configured to store a computer program. The computer program enables a computer to perform the method described in any one of the first aspect to the second aspect or each implementation thereof.

According to a ninth aspect, the disclosure provides a computer program product. The computer program product includes computer program instructions. The computer program instructions enable a computer to perform the method described in any one of the first aspect to the second aspect or each implementation thereof.

According to a tenth aspect, the disclosure provides a computer program. When the computer program is run on a computer, the computer is enabled to perform the method described in any one of the first aspect to the second aspect or each implementation thereof.

In the disclosure, the backscatter signal is sent based on the transmission resource, the backoff parameter or the time unit corresponding to the type or terminal group to which the terminal device belongs, that is, terminal devices of different types or different groups correspond to different transmission resources, backoff parameters or time units, so that resource conflicts between the terminal devices of different types or different groups can be avoided, and the reliability of data transmission is improved.

In particular, for the energy-constrained terminal device such as a terminal device that needs to perform energy harvesting and storage between communications and is far from a network device, generally, the terminal device communicates with the network device by using a contention-based mechanism, that is, after the scheduling signaling of the network device is received, the terminal device contends for resources on a specific time unit; a terminal device which is successful in contention may be further scheduled by a network; and a terminal which is failed in contention performs backoff and waits for the next contention opportunity. When the number of the terminal devices participating in contention is large, the successful probability of the single terminal device for contention is greatly reduced, leading to data transmission failure; in other words, the terminal device may successfully transmit data after a plurality of contentions. That is to say, if the energy-constrained terminal device participates in resource contention with other terminals, it is apparent that the limited energy stored is consumed too much. In this embodiment, by distinguishing such terminals from other terminals, such terminals are able to receive the scheduling signaling by using dedicated transmission resources, backoff parameters for acquiring resources or a dedicated time unit, so that the success rate of the contention for resources can be improved, so as to shorten the time and energy consumption taken for successful data transmission, thereby saving the energy harvested or stored by the terminal device and improving utilization efficiency of the energy. Therefore, energy requirements during communication can be met.

### BRIEF DESCRIPTION OF THE DRAWINGS

FIG. 1 is a schematic diagram of a communication system according to an embodiment of the disclosure.
FIG. 2 is a schematic diagram of a zero-power-consumption communication system according to the disclosure.
FIG. 3 is a schematic diagram of energy harvesting according to an embodiment of the disclosure.
FIG. 4 is a schematic diagram of a backscatter communication according to the disclosure.
FIG. 5 is a schematic circuit diagram of resistive load modulation according to an embodiment of the disclosure.
FIG. 6 is a schematic block diagram of a wireless communication method according to an embodiment of the disclosure.
FIG. 7 and FIG. 8 are schematic structural diagrams of a transmission resource for transmitting a backscatter signal according to an embodiment of the disclosure.
FIG. 9 is another schematic block diagram of a wireless communication method according to an embodiment of the disclosure.
FIG. 10 is a schematic block diagram of a terminal device according to an embodiment of the disclosure.
FIG. 11 is a schematic block diagram of a network device according to an embodiment of the disclosure.
FIG. 12 is another schematic block diagram of a communication device according to an embodiment of the disclosure.
FIG. 13 is a schematic block diagram of a chip according to an embodiment of the disclosure.

### DETAILED DESCRIPTION

The technical solutions in the embodiments of the disclosure will be described below with reference to the drawings in the embodiments of the disclosure. It is apparent that the described embodiments are only part of the embodiments of the disclosure, not all the embodiments. All the embodiments obtained by those of ordinary skill in the art based on the embodiments in the disclosure without creative work all fall within the scope of protection of the disclosure.

It is to be understood that, terms "system" and "network" in the disclosure may usually be exchanged in the disclosure. The term "and/or" in the disclosure is merely an association relationship describing related objects, which means that there may be three relationships, for example, A and/or B may indicate three cases: A exists alone, A and B exist simultaneously, and B exists alone. In addition, the character "/" in this paper generally indicates that the related objects are in an "or" relationship.

In the descriptions of the embodiments of the disclosure, the term "corresponding" may indicate a direct or indirect relationship between two parties, or an association relationship between the two parties, or a relationship of indicating and being indicated, configuring and being configured, and so on.

The embodiments of the disclosure are applicable to various communication systems, for example, a Global System of Mobile communication (GSM), a Code Division Multiple Access (CDMA) system, a Wideband Code Division Multiple Access (WCDMA) system, a General Packet Radio Service (GPRS), a Long Term Evolution (LTE) system, an Advanced Long Term Evolution (LTE-A) system, an New Radio (NR) system, an evolution system of the NR system, an LTE-based Access to Unlicensed Spectrum (LTE-U) system, a NR-based Access to Unlicensed Spectrum (NR-U) system, a Universal Mobile Telecommunications System (UMTS), a Wireless Local Area Network (WLAN), Wireless Fidelity (WiFi), a next generation of communication systems, a zero-power-consumption communication system, cellular Internet of Things, cellular passive Internet of Things, or other communication systems.

The cellular Internet of Things is a developmental product of the combination of a cellular mobile communication network and the Internet of Things. The cellular passive Internet of Things is also called a passive cellular Internet of Things, which is combined by a network device and a passive terminal. The passive terminal in the cellular passive Internet of Things may communicate with other passive terminals by means of the network device, or the passive terminal may achieve communication by means of a Device to Device (D2D) communication; and the network device only needs to send a carrier signal, that is, an energy supply signal, so as to supply energy to the passive terminal.

Generally, the number of connections that is supported by a conventional communication system is limited and is easy to achieve. However, with the development of a communication technology, a mobile communication system not only supports traditional communication, but also supports, for example, D2D communication, Machine to Machine (M2M) communication, Machine Type Communication (MTC), and Vehicle to Vehicle (V2V) communication. The embodiments of the disclosure may also be applied to these communication systems.

Optionally, in the embodiments of the disclosure, the communication system may be applied to a Carrier Aggregation (CA) scenario, or may be applied to a Dual Connectivity (DC) scenario, or may be applied to a Standalone (SA) networking scenario.

In the embodiments of the disclosure, an applied spectrum is not limited. For example, the embodiments of the disclosure may be applied to a licensed spectrum or an unlicensed spectrum.

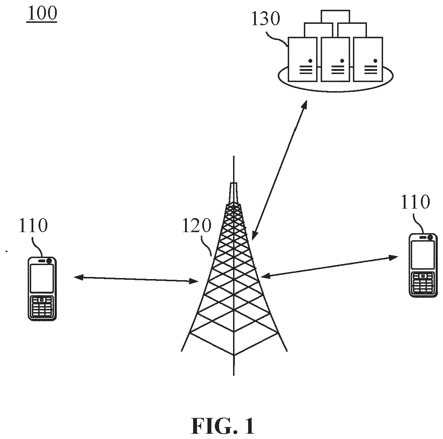

Exemplarily, a communication system 100 applied in an embodiment of the disclosure is shown in FIG. 1. The communication system 100 may include a network device 110. The network device 110 may be a device communicating with a terminal device 120 (or called a communication terminal or a terminal). The network device 110 may provide communication coverage for a specific geographical region, and may communicate with the terminal device located in the coverage region.

FIG. 1 exemplarily shows a network device and two terminal devices. Optionally, the communication system 100 may include a plurality of network devices, and the coverage of each network device may include other numbers of terminal devices. The embodiments of the disclosure are not limited thereto.

Optionally, the communication system 100 may further include other network entities such as a network controller and a mobile management entity. The embodiments of the disclosure are not limited thereto.

It is to be understood that, a device having a communication function in a network/system in the embodiments of the disclosure may be called as a communication device. By using the communication system 100 shown in FIG. 1 as an example, the communication device may include a network device 110 having a communication function and a terminal device 120. The network device 110 and the terminal device 120 may be specific devices described above, which are not described herein again. The communication device may further include other devices in the communication system 100, such as other network entities such as a network controller and a mobile management entity. The embodiments of the disclosure are not limited thereto.

In the embodiments of the disclosure, each embodiment is described in combination with the terminal device and the network device. The network device may be a device that is configured to communicate with a mobile device. The network device may be an Access Point (AP) in the WLAN, GSM or a Base Transceiver Station (BTS) in the CDMA, or may be NodeB (NB) in the WCDMA, or may also be an Evolutional Node B (eNB or eNodeB) in the LTE, or a relay station or access point, or the vehicle device, the wearable device, and a network device (gNB) in the NR network or a network device in a future evolved PLMN network, or the like.

In the embodiments of the disclosure, the network device provides a service for a cell. The terminal device communicates with the network device by means of a transmission resource (for example, a frequency domain resource, or to say, a spectrum resource) used by the cell. The cell may be a cell corresponding to the network device (such as the base station). The cell may belong to a macro base station, or may belong to the base station corresponding to a small cell. The small cell here may include a metro cell, a micro cell, a pico cell, a femto cell, and the like. These small cells have the characteristics of having small coverage and low transmitting power, and are suitable for providing high-speed data transmission services.

In the embodiments of the disclosure, the terminal device may also be called a User Equipment (UE), an access terminal, a user unit, a user station, a mobile station, a mobile platform, a remote station, a remote terminal, a mobile device, a user terminal, a terminal, a wireless communication device, a user agent, or a user device. The terminal device may be a STAION (ST) in the WLAN, or may be a cellular phone, a cordless phone, a Session Initiation Protocol (SIP) phone, a Wireless Local Loop (WLL) station, a Personal Digital Assistant (PDA) device, a handheld device having a wireless communication function, a computing device or another processing device of a wireless modem, a vehicle device, a wearable device or a next generation of communication systems, for example, a terminal device in an NR network, or a terminal device in a future evolved Public Land Mobile Network (PLMN), or a zero-power-consumption device.

As an example rather than a limitation, in the embodiments of the disclosure, the terminal device may further be the wearable device. The wearable device may also be called a wearable intelligent device, which is a generic term of daily wearable devices that are intelligently designed and developed by means of a wearable technology, for example, glasses, gloves, watches, clothing and shoes. The wearable device is a portable device that is directly worn on the body or integrated into the clothes or accessories of a user. The wearable device is not only a hardware device, but also achieves powerful functions by means of software support, data interaction, and cloud interaction. In a broad sense, the wearable intelligent device includes full functions and have large size, and complete or partial functions thereof are implemented without relying on smart phones, for example, a smart watch or smart glasses; and the wearable intelligent device may only concentrate on a certain application function and are required to be used by cooperating with other devices such as the smart phones, such as various smart wristbands or smart ornaments for physical sign monitoring.

It is to be understood that, the zero-power-consumption device may be understood as a device of which power consumption is less than preset power consumption, for example, including a passive terminal, and even further including a semi-passive terminal.

The zero-power-consumption communication uses energy harvesting and backscatter communication technologies. For ease of understanding of the technical solutions in the embodiments of the disclosure, technologies related to zero-power-consumption are described.

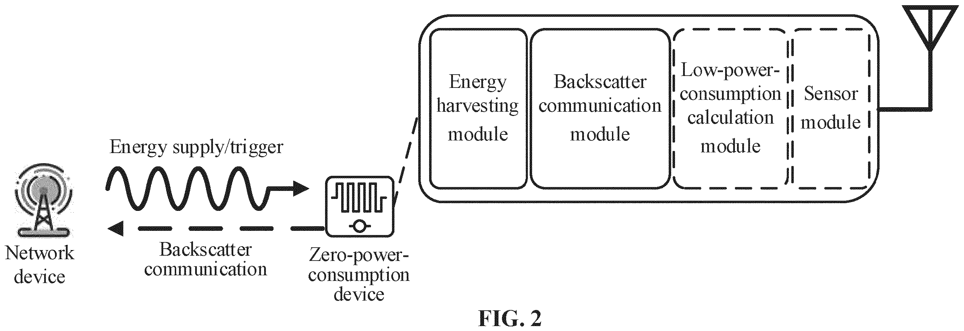

FIG. 2 is a schematic diagram of a zero-power-consumption communication system according to the disclosure.

As shown in FIG. 2, the zero-power-consumption communication system is formed by the network device and a zero-power-consumption terminal. The network device is configured to send a wireless energy supply signal and a downlink communication signal to the zero-power-consumption terminal, and receive a backscatter signal of the zero-power-consumption terminal. A basic zero-power-consumption terminal includes an energy harvesting module, a backscatter communication module, and a low-power-consumption calculation module. In addition, the zero-power-consumption terminal may also be provided with a memory or a sensor, and is configured to store some basic information (such as an item identifier) or acquire sensing data such as an environment temperature and an environment humidity.

Zero-power-consumption communication may also be called communication based on the zero-power-consumption terminal. The key technologies of the zero-power-consumption communication mainly include Radio Frequency (RF) energy harvesting and backscatter communication.

### 1. Energy harvesting (RF Power Harvesting)

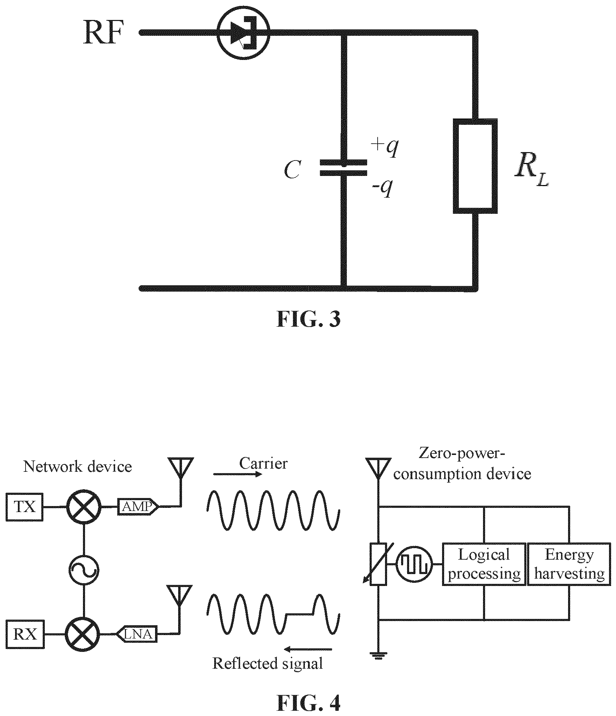

FIG. 3 is a schematic diagram of energy harvesting according to an embodiment of the disclosure.

As shown in FIG. 3, an RF energy harvesting module harvests space electromagnetic wave energy based on the principle of electromagnetic induction, so as to obtain energy required to drive the zero-power-consumption terminal, for example, for driving a low-power-consumption demodulation and modulation module, a sensor, and internal storage reading. Therefore, the zero-power-consumption terminal does not need a conventional battery.

### 2. Backscatter communication (Back Scattering)

FIG. 4 is a schematic diagram of a backscatter communication according to the disclosure.

As shown in FIG. 4, a zero-power-consumption communication terminal receives a wireless signal sent by a network, modulates the wireless signal, loads information to be sent, and radiates the modulated signal from an antenna. Such information transmission process is called backscatter communication. It is to be noted that, the principle of backscatter communication shown in FIG. 4 is described by the zero-power-consumption device and the network device. Actually, any device having a backscatter communication function may implement backscatter communication.

Backscatter communication and load modulation functions are inextricably linked. Load modulation is to adjust and control circuit parameters of an oscillation circuit of the zero-power-consumption terminal according to the beat of a data stream, so as to enable the resistance and phase of the zero-power-consumption device to vary accordingly, thereby completing a modulation process. A load modulation technology mainly includes resistive load modulation and capacitive load modulation.

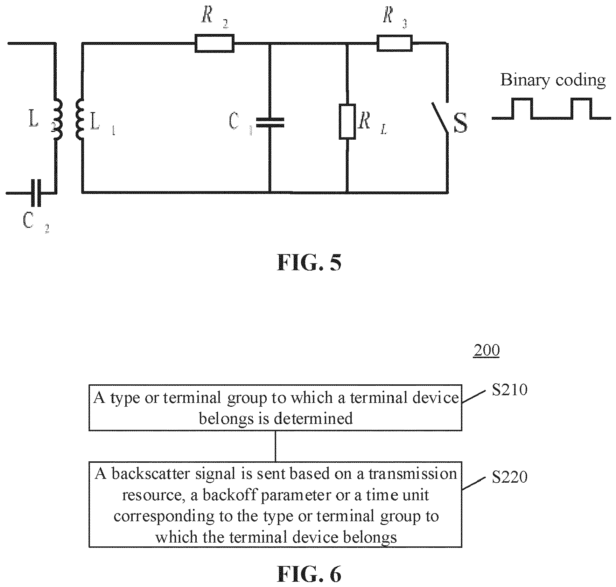

FIG. 5 is a schematic circuit diagram of resistive load modulation according to an embodiment of the disclosure.

As shown in FIG. 5, in the resistive load modulation, a load is connected in parallel with a resistor called a load modulation resistor. The resistor is turned on or off based on control of a binary data stream, and a circuit voltage is changed due to the turn-on and off of the resistor, so that Amplitude Shift Keying (ASK) is realized, that is, signals are modulated and transmitted by adjusting amplitudes of the backscatter signals of the zero-power-consumption terminal. Similarly, during capacitive load modulation, changes in a circuit resonance frequency may be achieved by turning on or off a capacitor, so as to achieve Frequency Shift Keying (FSK), that is, the signals are modulated and transmitted by adjusting the working frequencies of backscatter signals of the zero-power-consumption terminal.

Since the zero-power-consumption terminal performs information modulation on an incoming-wave signal by means of load modulation, a backscatter communication process is realized. Therefore, the zero-power-consumption terminal has significant advantages.
1. The terminal device does not actively transmit a signal, and achieves backscatter communication by modulating the incoming-wave signal.
2. The terminal device does not rely on a conventional active Power Amplifier (PA) transmitter, and uses a low-power-consumption calculation unit, thereby greatly reducing hardware complexity.
3. Battery-free communication may be realized in combination with energy harvesting.

It is to be understood that, the terminal device may be the zero-power-consumption device (for example, a passive terminal, or even a semi-passive terminal); and the terminal device may even a non-zero-power-consumption device such as a common terminal, but the common terminal may perform backscatter communication in some cases.

In a specific implementation, data transmitted by the terminal device may use codes of different forms to represent binary "1" and "0". A radio frequency identification system generally uses one of the following coding methods: Non Return-to-Zero (NRZ) coding, Manchester coding, Unipolar Return-to-Zero (RZ) coding, Differential Bi-Phase (DBP) coding, Miller coding, and differential coding. Generally speaking, different pulse signals are used to represent 0 and 1 through different coding methods.

Exemplarily, the zero-power-consumption terminals may be classified into the following types based on their energy source and usage mode.

### 1. Passive zero-power-consumption terminal

A battery does not need to be provided in the zero-power-consumption terminal; and when the zero-power-consumption terminal approaches the network device (for example, a reader-writer of an RFID system), the zero-power-consumption terminal is within a near field range formed through radiation of an antenna of the network device. Therefore, an antenna of the zero-power-consumption terminal generates an induced current through electromagnetic induction, and then the induced current drives a low-power-consumption chip circuit of the zero-power-consumption terminal, so as to demodulate a forward link signal and modulate a backward link signal. For a backscatter link, the zero-power-consumption terminal transmits the signal by means of backscatter.

Therefore, regardless of a forward link or a backward link, the passive zero-power-consumption terminal does not need to be driven by a built-in battery, so that the passive zero-power-consumption terminal is a true zero-power-consumption terminal. The passive zero-power-consumption terminal does not need the battery, and an RF circuit and a baseband circuit thereof are very simple, for example, devices such as Low Noise Amplifier (LNA), PA, crystal oscillator, and Analog-to-Digital Converter (ADC) are not required, so that the passive zero-power-consumption terminal has various advantages of being small in size, light in weight, cheap in price, and long in service life.

### 2. Semi-passive zero-power-consumption terminal

The semi-passive zero-power-consumption terminal is also not provided with the conventional battery, but may use the RF energy harvesting module to harvest radio wave energy, and store the harvested energy in an energy storage unit (for example, a capacitor). After obtaining the energy, the energy storage unit may drive the low-power-consumption chip circuit of the zero-power-consumption terminal, so as to demodulate the forward link signal and modulate the backward link signal. For the backscatter link, the zero-power-consumption terminal transmits the signal by means of backscatter.

Therefore, regardless of a forward link or a backward link, the semi-passive zero-power-consumption terminal does not need to be driven by a built-in battery, and although energy stored by the capacitor is used during operation, the energy is derived from radio energy harvested by the energy harvesting module, so that the semi-passive zero-power-consumption terminal is a true zero-power-consumption terminal. The semi-passive zero-power-consumption terminal inherits various advantages of the passive zero-power-consumption terminal, so that the semi-passive zero-power-consumption terminal has various advantages of being small in size, light in weight, cheap in price, and long in service life.

### 3. Active zero-power-consumption terminal

In some scenarios, the zero-power-consumption terminal used may also be an active zero-power-consumption terminal, and the terminal may be provided with a built-in battery. The battery is configured to drive the low-power-consumption chip circuit of the zero-power-consumption terminal, so as to demodulate the forward link signal and modulate the backward link signal. However, for the backscatter link, the zero-power-consumption terminal transmits the signal by means of backscatter. Therefore, zero power consumption of the terminal is mainly reflected in the fact that signal transmission of the backward link does not require the power of the terminal per se, but uses a backscatter mode. That is to say, the active zero-power-consumption terminal supplies power to an RFID chip by the built-in battery, so as to increase a reading-writing distance of the zero-power-consumption terminal, thereby improving the reliability of communications. Therefore, the active zero-power-consumption terminal is used in scenarios that have high requirements for aspects such as a communication distance and reading delay.

As application requirements in 5G industry increase, there are more and more types and application scenarios of linkers; there are also higher requirements for the price and power consumption of a communication terminal; application of battery-free and low-cost passive Internet of Things device becomes the key technology of the cellular Internet of Things, which is able to enrich the type and number of terminals in the network, so that Internet of Everything can be truly realized. The passive Internet of Things device may be based on the current zero-power-consumption device, for example, an RFID technology, and extends based on this, so as to adapt the cellular Internet of Things.

In actual network deployment, a technical bottleneck of the passive zero-power-consumption communication technology is a limited coverage distance of the forward link, and the main reason is that the communication distance of the forward link is limited by the signal strength of a wireless signal arriving at the zero-power-consumption terminal. Based on the implementation process, the zero-power-consumption terminal generally needs to consume 10 microwatts (uw) of power, so as to drive a low-power-consumption circuit, which means that the power of the signal arriving at the zero-power-consumption terminal at least needs to be -20 dBm. Limited by the requirements of radio regulation, the transmitting power of the network device is generally not too high, for example, in the Industrial Scientific Medical (ISM) frequency band where RFID operates, the maximum transmitting power is 30 dBm. Therefore, considering of the radio propagation loss in space, a transmission distance of the passive zero-power-consumption terminal generally ranges from 10 m to dozens of meters.

The semi-passive zero-power-consumption terminal has the potential to significantly extend the communication distance, this is because the semi-passive zero-power-consumption terminal may harvest radio waves by using the RF energy harvesting module, therefore, radio energy may be continuously acquired and stored in the energy storage unit. After obtaining enough energy, the energy storage unit may drive the low-power-consumption circuit to perform operations for demodulating the forward link signal and modulating the backward link signal. Therefore, in this case, the semi-passive zero-power-consumption terminal is equivalent to an active terminal, of which the downlink coverage depends on the sensitivity (which is generally far less than an RF energy harvesting threshold) of a receiver of a downlink signal. Based on the current process, when the strength of the received radio signal is not less than -30 dBm, the energy harvesting module may perform energy harvesting and input electric energy to the energy storage unit. Therefore, the coverage of the forward link of the semi-passive zero-power-consumption terminal depends on the RF energy harvesting threshold (for example, -30 dBm). Compared with the passive zero-power-consumption terminal, the strength of the received radio signal is relaxed from -20 dBm to -30 dBm, so that 10 dB of link budget gain may be obtained, thereby improving the downlink coverage by more than 3 times.

However, while the coverage of the forward link is improved, the semi-passive zero-power-consumption terminal also has the problem of reduced charging efficiency. As the strength of the received signal reduces, the energy that may be harvested and stored by the energy harvesting module is greatly reduced. For example, when the strength of the received signal is -30 dBm, that is, 1 uw, the energy that may be harvested and stored is much less than 1 uw (the efficiency of energy harvesting is greatly reduced). In another aspect, as described above, the low-power-consumption circuit of the zero-power-consumption terminal may consume 10 uw of average power. By combining two aspects, it may be learned that, when the semi-passive zero-power-consumption terminal is far from the network device, the charging efficiency is reduced greatly. Energy harvested instantly is unable to meet instant communication requirements, and the energy needs to be harvested and stored before communication. Therefore, the energy harvested by the terminal needs to be used in an energy-saving manner, so as to meet energy requirements during communication. That is to say, when the zero-power-consumption terminal is far from a network site, the speed of obtaining and storing the energy in an energy harvesting manner is very slow,. Therefore, during communication with the terminal, efficient use of the obtained energy needs to be taken into consideration, so that the energy obtained through energy harvesting may meet communication requirements.

Embodiments of the disclosure provide a wireless communication method, a terminal device, and a network device, which are able to save energy harvested by a terminal device and improve the utilization efficiency of the energy, thereby meeting energy requirements during communication.

FIG. 6 is a schematic flowchart of a wireless communication method 200 according to an embodiment of the disclosure. The method 200 may be executed by the terminal device, for example, the terminal device 120 shown in FIG. 1, and for another example, a zero-power-consumption terminal.

As shown in FIG. 6, the method 200 may include the following steps.

At S210, a type or terminal group to which a terminal device belongs is determined.

At S220, a backscatter signal is sent based on a transmission resource, a backoff parameter or a time unit corresponding to the type or terminal group to which the terminal device belongs.

The backscatter signal is sent based on the transmission resource, the backoff parameter or the time unit corresponding to the type or terminal group to which the terminal device belongs, that is, terminal devices of different types or different groups correspond to different transmission resources, backoff parameters or time units, so that resource conflicts between the terminal devices of different types or different groups can be avoided, and the reliability of data transmission is improved.

In particular, for the energy-constrained terminal device such as a terminal device that needs to perform energy harvesting and storage between communications and is far from a network device, generally, the terminal device communicates with the network device by using a contention-based mechanism, that is, after the scheduling signaling of the network device is received, the terminal device contends for resources on a specific time unit; a terminal device which is successful in contention may be further scheduled by a network; and a terminal which is failed in contention performs backoff and waits for the next contention opportunity. When the number of the terminal devices participating in contention is large, the successful probability of the single terminal device for contention is greatly reduced, leading to data transmission failure; in other words, the terminal device may successfully transmit data after a plurality of contentions. That is to say, if the energy-constrained terminal device participates in resource contention with other terminals, it is apparent that the limited energy stored is consumed too much. In this embodiment, by distinguishing such terminals from other terminals, such terminals are able to receive the scheduling signaling by using dedicated transmission resources, backoff parameters for acquiring resources or a dedicated time unit, so that the success rate of contention for resources can be improved, so as to shorten the time and energy consumption taken for successful data transmission, thereby saving the energy harvested or stored by the terminal device and improving utilization efficiency of the energy. Therefore, energy requirements during communication can be met.

In some embodiments, the type to which the terminal device belongs includes a first type and a second type; the terminal group to which the terminal device belongs includes a first terminal group and a second terminal group; at least one of the first type or the first terminal group includes an energy-constrained terminal device; and at least one of the second type or the second terminal group includes terminal devices other than the energy-constrained terminal device.

In other words, the terminal devices may be classified into two types, that is, the first type and the second type. Similarly, the terminal devices may be classified into two terminal groups, that is, the first terminal group and the second terminal group. It is apparently that, in other alternative embodiments, more than two types or terminal groups may also be defined, and the disclosure is not specifically limited thereto. For example, the terminal devices may be classified into at least two types or at least two terminal groups.

Optionally, the first type or the first terminal group includes a terminal having an energy harvesting capability.

Optionally, the first type or the first terminal group includes a terminal device which is far from a wireless energy supply node.

Optionally, the first type or the first terminal group includes a terminal device with low energy harvesting efficiency.

Optionally, the first type or the first terminal group includes a semi-passive zero-power-consumption terminal.

It is to be noted that, the type and terminal group involved in the embodiments of the disclosure may be replaced equivalently. In other words, the type may be replaced with the terminal group, and the terminal group may also be replaced with the type. For example, the terminal device of the same type may be a terminal in the same terminal group, and the type of the terminal in the same terminal group may be the same type. For example, if the type to which the terminal device belongs is the first type, the terminal group to which the terminal device belongs is the first terminal group; and similarly, if the type to which the terminal device belongs is the second type, the terminal group to which the terminal device belongs is the second terminal group.

In some embodiments, the type to which the terminal device belongs includes the first type and the second type; the terminal group to which the terminal device belongs includes the first terminal group and the second terminal group; a transmission resource corresponding to the first type is different from a transmission resource corresponding to the second type; and a transmission resource corresponding to the first terminal group is different from a transmission resource corresponding to the second terminal group.

Optionally, the transmission resource includes at least one of a scheduling resource or a scheduling-free resource.

As an example, the scheduling resource corresponding to the first type is different from the scheduling resource corresponding to the second type; and the scheduling resource corresponding to the first terminal group is different from the scheduling resource corresponding to the second terminal group. As another example, the scheduling-free resource corresponding to the first type is different from the scheduling-free resource corresponding to the second type; and the scheduling-free resource corresponding to the first terminal group is different from the scheduling-free resource corresponding to the second terminal group.

Optionally, the scheduling-free resource may be a pre-configured resource or a resource that does not need to be scheduled by the scheduling signaling.

Optionally, the scheduling resource may be a resource that needs to be scheduled by the scheduling signaling.

In some embodiments, S220 may include the following operations.

Scheduling signaling for scheduling the transmission resource corresponding to the type or terminal group to which the terminal device belongs is received, where the scheduling signaling is used for indicating the transmission resource corresponding to the first type or the first terminal group, or the scheduling signaling is used for indicating the transmission resource corresponding to the second type or the second terminal group.

The backscatter signal is sent based on the transmission resource scheduled by the scheduling signaling.

In other words, the scheduling signaling is used for indicating that the transmission resource scheduled by the scheduling signaling is the transmission resource corresponding to the first type or the first terminal group, or the scheduling signaling is used for indicating that the transmission resource scheduled by the scheduling signaling is the transmission resource corresponding to the second type or the second terminal group.

It is to be noted that, the term "indication" involved in the embodiments of the disclosure may be direct or indirect, and may also represent an association relationship. For example, that A indicates B may represent that A directly indicates B, for example, B may be acquired through A; or may represent that A indirectly indicates B, for example, A indicates C, and B may be acquired through C; or may represent that there is an association relationship between A and B. In combination with the solutions of the disclosure, A may be the scheduling signaling. In an implementation, C may be the first type or the first terminal group. In another implementation, C may also be the second type or the second terminal group.

The solution of this embodiment is described below by using, as a contended resource, the transmission resource scheduled by the scheduling signaling.

After the network device sends a wireless signal to activate the terminal device, there is no identity information of the terminal device. Therefore, generally, the terminal device communicates with the network device by using a contention-based mechanism, that is, after the scheduling signaling of the network device is received, the terminal device contends for resources on a specific time unit. The terminal device which is successful in contention may be further scheduled by a network. The terminal device which is failed in contention performs backoff and waits for the next contention opportunity. It may be seen that, when the number of the terminal devices participating in contention is large, the successful probability of the single terminal device for contention is greatly reduced. Specifically, as described above, the terminal device generally sends the backscatter signal such as ASK by using a simple modulation mode, and signals of the terminal devices are all unable to be correctly demodulated by the network device due to signal superposition of a plurality of terminal devices, leading to data transmission failure; and in other words, the terminal device may successfully transmit data after a plurality of contentions.

If the foregoing semi-passive zero-power-consumption terminal participates in resource contention with other zero-power-consumption terminals, it is apparently that the limited energy stored is consumed too much. Therefore, in this embodiment, by distinguishing such terminals (that is, the terminal included in the first type or the first terminal group) from other terminals, such terminals and other terminals contend for resources at different resource positions, so that the time and energy consumption taken for successful data transmission are reduced.

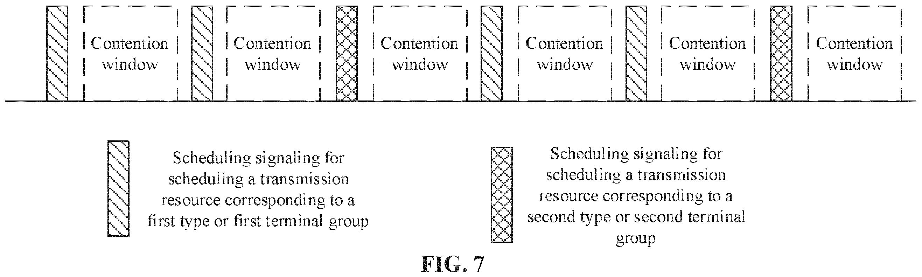

FIG. 7 is a schematic structural diagram of different scheduling signaling corresponding to different types or terminal groups according to an embodiment of the disclosure.

As shown in FIG. 7, the network device may indicate, in the scheduling signaling, the type or terminal group corresponding to the scheduling signaling. For example, using two types or two terminal groups as an example, the network device may indicate, in the scheduling signaling, whether the type corresponding to the scheduling signaling is the first type or the second type, or the network device may indicate, in the scheduling signaling, whether the terminal group corresponding to the scheduling signaling is the first terminal group or the second terminal group. In other words, the scheduling signaling for scheduling the transmission resource corresponding to the first type or the first terminal group and the scheduling signaling for scheduling the transmission resource corresponding to the second type or the second terminal group are respectively transmitted on different time units.

Optionally, if a value of an information field in the scheduling signaling is a first numerical value, the scheduling signaling is used for indicating the transmission resource corresponding to the first type or the first terminal group; and if the value of the information field is a second numerical value, the scheduling signaling is used for indicating the transmission resource corresponding to the second type or the second terminal group.

In other words, the information field of the scheduling signaling may be used for indicating the transmission resource corresponding to the first type or the first terminal group, or the information field of the scheduling signaling may be used for indicating the transmission resource corresponding to the second type or the second terminal group. Alternatively, the scheduling signaling uses different values in the information field to indicate the transmission resources corresponding to different types or terminal groups. Optionally, the information field may also be called a bit domain. Optionally, the bit domain includes one bit. It is to be understood that, the specific values of the first numerical value and the second numerical value are not limited in the disclosure. For example, the first numerical value is 0 and the second numerical value is 1; for another example, the first numerical value is 1 and the second numerical value is 0.

Optionally, if a sequence used by the scheduling signaling is a first sequence, the scheduling signaling is used for indicating the transmission resource corresponding to the first type or the first terminal group; and if the sequence used by the scheduling signaling is a second sequence, the scheduling signaling is used for indicating the transmission resource corresponding to the second type or the second terminal group. Optionally, the sequence used by the scheduling signaling includes a scrambling code sequence, Cyclic Redundancy Check (CRC) or a Cell Radio Network Temporary Identifier (C-RNTI).

In other words, the sequence used by the scheduling signaling may be used for indicating the transmission resource corresponding to the first type or the first terminal group, or the sequence used by the scheduling signaling may be used for indicating the transmission resource corresponding to the second type or the second terminal group. Alternatively, the scheduling signaling uses different sequences to indicate the transmission resources corresponding to different types or terminal groups. It is apparently that, in other alternative embodiments, the sequence used by the scheduling signaling may also be a sequence other than the above sequences, and the disclosure is not limited thereto.

Optionally, if a length of the scheduling signaling is a first length, the scheduling signaling is used for indicating the transmission resource corresponding to the first type or the first terminal group; and if the length of the scheduling signaling is a second length, the scheduling signaling is used for indicating the transmission resource corresponding to the second type or the second terminal group.

In other words, the length of the scheduling signaling may be used for indicating the transmission resource corresponding to the first type or the first terminal group, or the length of the scheduling signaling may be used for indicating the transmission resource corresponding to the second type or the second terminal group. Alternatively, the scheduling signaling with different lengths indicates the transmission resources corresponding to different types or terminal groups.

Optionally, if a frequency position for transmitting the scheduling signaling is a first frequency position, the scheduling signaling is used for indicating the transmission resource corresponding to the first type or the first terminal group; and if the frequency position for transmitting the scheduling signaling is a second frequency position, the scheduling signaling is used for indicating the transmission resource corresponding to the second type or the second terminal group.

In other words, the frequency position of the scheduling signaling may be used for indicating the transmission resource corresponding to the first type or the first terminal group, or the frequency position of the scheduling signaling may be used for indicating the transmission resource corresponding to the second type or the second terminal group. Alternatively, the scheduling signaling on different frequency positions indicates the transmission resources corresponding to different types or terminal groups.

In some embodiments, S220 may include the following operations.

The backoff parameter corresponding to the type or terminal group to which the terminal device belongs is acquired.

The backscatter signal is sent based on the transmission resource contended according to the backoff parameter corresponding to the type or terminal group to which the terminal device belongs.

Optionally, the type to which the terminal device belongs includes a first type and a second type; the terminal group to which the terminal device belongs includes a first terminal group and a second terminal group; the backoff parameter corresponding to the first type is different from the backoff parameter corresponding to the second type; and the backoff parameter corresponding to the first terminal group is different from the backoff parameter corresponding to the second terminal group.

Optionally, the backoff parameter corresponding to the first type is less than the backoff parameter corresponding to the second type; and the backoff parameter corresponding to the first terminal group is less than the backoff parameter corresponding to the second terminal group.

In other words, for the terminal device belonging to the first type or the first terminal group, a backoff parameter different from the backoff paramter of the terminal device belonging to the second type or the second terminal group may be set during transmission. For example, assuming that the terminal device belonging to the first type or the first terminal group shares the same transmission resource with the terminal device belonging to the second type or the second terminal group, a more favorable manner for the terminal device belonging to the first type or the first terminal group to obtain resources is used. For example, when there is a conflict in contention for a resource, the backoff parameter with a small numerical value is used, that is, the terminal device belonging to the first type or the first terminal group only needs to perform backoff for relatively-short time to contend for a channel resource again; and the terminal device belonging to the second type or the second terminal group needs to perform backoff for relatively-long time to contend for the channel resource again.

As an example, the terminal device belonging to the first type or the first terminal group performs backoff by using the backoff parameter with a numerical value of M, that is, the terminal device generates a random integer M, which is greater than or equal to 1 and less than or equal to a backoff parameter Q1; and then time backoff is performed based on the random integer M, for example, performing backoff of M time units. The terminal device belonging to the second type or the second terminal group performs backoff by using the backoff parameter with a numerical value of N, that is, the terminal device generates a random integer N, which is greater than or equal to 1 and less than or equal to a backoff parameter Q2; and then time backoff is performed based on the random integer N, for example, performing backoff of N time units. In combination with the solution of this embodiment of the disclosure, the two backoff parameters may be designed to be Q1<Q2.

Optionally, the backoff parameter corresponding to the type or terminal group to which the terminal device belongs may be notified by the network device.

Optionally, the backoff parameter corresponding to the type or terminal group to which the terminal device belongs may be carried in at least one of the following:
the scheduling signaling, system information, or Radio Resource Control (RRC) signaling.

In some embodiments, S220 may include the following operations.

Scheduling signaling of the terminal device is received on the time unit corresponding to the type or terminal group to which the terminal device belongs.

The backscatter signal is sent based on the transmission resource scheduled by the scheduling signaling.

In other words, different types or terminal groups correspond to different time units for receiving the scheduling signaling.

For the semi-passive zero-power-consumption terminal (that is, the terminal device belonging to the first type or the first terminal group), the semi-passive zero-power-consumption terminal obtains wireless energy based on harvesting of radio waves in space (which may be energy supply signals sent by the network device, or may be wireless signals sent by other devices, such as a WIFI router). After a certain amount of electricity is obtained (for example, a capacitor voltage is greater than a specific threshold value), the semi-passive zero-power-consumption terminal is activated and uses the harvested energy to drive a low-power-consumption circuit to operate, for example, starting monitoring the scheduling signaling sent by the network device.

In this embodiment, in order to temporally separate the scheduling resources of the semi-passive zero-power-consumption terminal and other terminals, the semi-passive zero-power-consumption terminal is scheduled on part of the time units, and other terminals are scheduled on the remaining time units. Alternatively, when there are less semi-passive terminal devices far from the network device, such terminals are scheduled by only using resources on a small number of time units, so as to avoid scheduling of the semi-passive zero-power-consumption terminal on all of the time units, so that the time for the semi-passive zero-power-consumption terminal to continuously monitoring the scheduling signaling is shortened, the energy harvested by the terminal device can be saved, and the utilization efficiency of the energy is improved, thereby meeting energy requirements during communication.

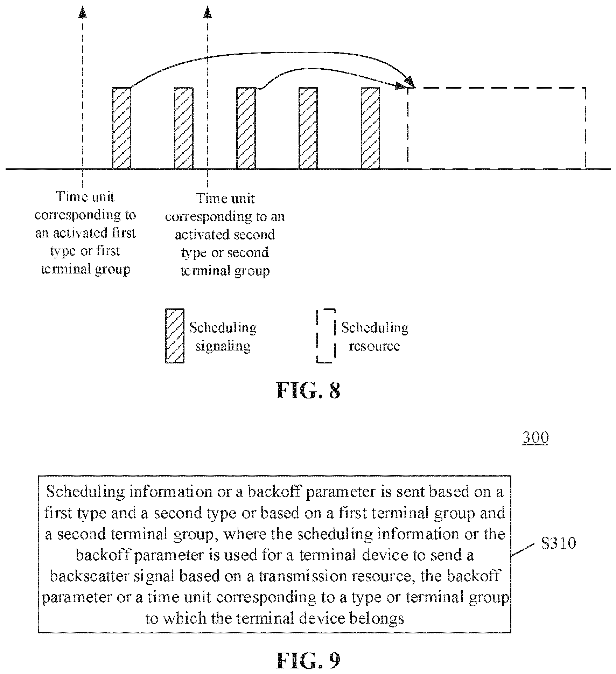

FIG. 8 is a schematic structural diagram of a transmission resource for transmitting a backscatter signal according to an embodiment of the disclosure.

As shown in FIG. 8, the terminal device belonging to the first type or the first terminal group receives the scheduling signaling on the time unit corresponding to the activated first type or first terminal group; and the terminal device belonging to the second type or the second terminal group receives the scheduling signaling on the time unit corresponding to the activated second type or second terminal group. The time unit corresponding to the activated first type or first terminal group is different from the time unit corresponding to the activated second type or second terminal group.

In some embodiments, the method 200 may further include the following operation.

Indication information is received, where the indication information is used for indicating the time unit corresponding to the type or terminal group to which the terminal device belongs.

In other words, the network device indicates the time unit corresponding to the type or terminal group to which the terminal device belongs, for example, indicating the time unit corresponding to the first type or the first terminal group, and for example, indicating the time unit corresponding to the second type or the second terminal group. It is apparently that, in other alternative embodiments, the indication information is used for indicating and activating the time unit corresponding to the type or terminal group to which the terminal device belongs, or the indication information is only used for activating the time unit corresponding to the type or terminal group to which the terminal device belongs, and the disclosure is not specifically limited thereto.

Relative to the position of the time unit when the network device actually schedules the semi-passive zero-power-consumption terminal, the position of the time unit where the semi-passive zero-power-consumption terminal obtains enough amount of electricity and is activated may be random, causing the position of the time unit where the semi-passive zero-power-consumption terminal is activated to be far from the position of the time unit for actually scheduling the semi-passive zero-power-consumption terminal. Before the semi-passive zero-power-consumption terminal is scheduled, if the semi-passive zero-power-consumption terminal continuously monitors scheduling information, the amount of hard-earned electricity may be wasted. In order to save the amount of electricity of the semi-passive zero-power-consumption terminal, the monitoring of unnecessary scheduling signaling by the terminal device needs to be avoided. In this embodiment, the terminal device may receive the scheduling signaling of the terminal device on the time unit corresponding to the type or terminal group to which the terminal device belongs.

Optionally, the indication information is used for indicating a time position of the time unit corresponding to the type or terminal group to which the terminal device belongs; or the indication information is used for indicating a time difference between the time unit corresponding to the type or terminal group to which the terminal device belongs and a time unit where the indication information is located; or the indication information is used for indicating distribution information of the time unit corresponding to the type or terminal group to which the terminal device belongs. Optionally, the distribution information includes at least one of a period of the time unit or a time position of a next time unit.

In other words, the indication information may directly indicate the time position of the time unit for transmitting the scheduling signaling, or may indicate the time difference between the time units where the indication information is located, or may indicate time distribution of the scheduled time units, for example, a period and/or a time difference between a subsequent first time position and the time unit where the indication information is located. Based on this, the terminal device may monitor the scheduling signaling on the corresponding time unit; and before this, the terminal device may enter a power saving mode, that is, not monitoring the scheduling signaling, so that efficient power saving is realized.

Optionally, the indication information is received in a periodic or non-periodic manner.

Optionally, the indication information is carried in at least one of the following:
scheduling signaling of terminal devices other than the terminal device, public signaling, or system information.

In some embodiments, S210 may include the following operation.

The type or terminal group to which the terminal device belongs is determined based on an energy harvesting speed of the terminal device.

Optionally, if the energy harvesting speed of the terminal device is less than or equal to a first threshold, the type to which the terminal device belongs is determined as the first type, or the terminal group to which the terminal device belongs is determined as the first terminal group; otherwise, the type to which the terminal device belongs is determined as the second type, or the terminal group to which the terminal device belongs is determined as the second terminal group.

In other words, the terminal device may determine, based on the energy harvesting speed, whether the terminal device belongs to the first type or the first terminal group or belongs to the second type or the second terminal group. For example, when the terminal device is far from the network device, the energy harvesting speed is very slow, and the obtained harvesting current is relatively small, for example, less than a first current threshold, so that the terminal device may be classified into the first type or the first terminal group, otherwise, the terminal device is classified into the second type or the second terminal group.

In some embodiments, S210 may include the following operation.

The type or terminal group to which the terminal device belongs is determined based on signal strength measured by the terminal device.

Optionally, if the signal strength or a signal voltage measured by the terminal device is less than or equal to a second threshold, the type to which the terminal device belongs is determined as the first type, or the terminal group to which the terminal device belongs is determined as the first terminal group; otherwise, the type to which the terminal device belongs is determined as the second type, or the terminal group to which the terminal device belongs is determined as the second terminal group.

In other words, the terminal device may determine, based on the measured signal strength, whether the terminal device belongs to the first type or the first terminal group or belongs to the second type or the second terminal group. For example, the terminal device has a measurement capability, and measures a specific signal sent by the network device, so as to obtain the signal strength or a signal voltage; and the signal strength or the signal voltage is compared with the second threshold to determine the type or terminal group to which the terminal device belongs. For example, if the measured signal strength or signal voltage is less than or equal to the second threshold, the type to which the terminal device belongs is determined as the first type, or the terminal group to which the terminal device belongs is determined as the first terminal group; otherwise, the type to which the terminal device belongs is determined as the second type, or the terminal group to which the terminal device belongs is determined as the second terminal group. Optionally, the specific signal includes, but is not limited to, an energy supply signal, other downlink signals, and any downlink signal such as a downlink scheduling signal sent by the network device.

In some embodiments, S210 may include the following operation.

The type or terminal group to which the terminal device belongs is determined based on deployment of a network device.

Optionally, if a distance between the terminal device and the network device is greater than or equal to a third threshold, the type to which the terminal device belongs is determined as the first type, or the terminal group to which the terminal device belongs is determined as the first terminal group; otherwise, the type to which the terminal device belongs is determined as the second type, or the terminal group to which the terminal device belongs is determined as the second terminal group.

In other words, the terminal device may determine, based on actually-deployed parameters, whether the terminal device belongs to the first type or the first terminal group or belongs to the second type or the second terminal group. For example, during network deployment, whether the terminal device belongs to the first type or the first terminal group or belongs to the second type or the second terminal group may be determined according to information such as the type of the terminal device, the deployment position of the terminal device, and network planning. For example, for the terminal device far from the network device, for example, the terminal device at a distance greater than the third threshold, the terminal device may be classified into the first type or the first terminal group, otherwise, the terminal device is classified into the second type or the second terminal group.

In some embodiments, S210 may include the following operations.

Storage information of the terminal device is acquired.

A type included in the storage information is determined as the type or terminal group to which the terminal device belongs.

Optionally, the storage information is carried in at least one of the following:
an internal storage, a Subscriber Identity Module (SIM), or an embedded Subscriber Identity Module (eSIM).

In other words, the type or terminal group to which the terminal device belongs may be written into the terminal device, for example, in the internal storage, the SIM or the eSIM.

Based on the above solutions, a terminal device (for example, which is far from the network device and weak in wireless energy supply signal) that is difficult to harvest energy uses dedicated scheduling signaling to allocate a dedicated scheduling resource, or uses the backoff parameter for obtaining the resources more friendly and conveniently, or is indicated of the position of the time unit where the potential scheduling signaling of the terminal device may be sent. These methods all facilitate energy saving of the terminal device, so that the harvested energy may be used in communication as much as possible, so as to enable a network to effectively support the operation of the terminal device.

The preferred implementations of the disclosure are described in detail above with reference to the drawings. However, the disclosure is not limited to the specific details in the above implementations, and within the scope of the technical concept of the disclosure, various simple modifications can be made to the technical solutions of the disclosure, and these simple modifications all fall within the protection scope of the disclosure. For example, each specific technical feature described in the above specific implementations can be combined in any suitable manner without contradiction. In order to avoid unnecessary repetition, various possible combinations are not described separately in the disclosure. For another example, the various implementations of the disclosure can also be combined arbitrarily, as long as without departing from the spirit of the disclosure, and should also be regarded as the contents disclosed in the disclosure.

It is also to be understood that, in various method embodiments of the disclosure, the sequence number of each process does not mean the sequence of execution. The execution sequence of each process should be determined by its functions and internal logic, which should not constitute any limitation on the implementation process of the embodiments of the disclosure. In addition, in the embodiments of the disclosure, the terms "downlink" and "uplink" are configured to indicate the transmission direction of a signal or data. Herein, "downlink" is configured to indicate that the transmission direction of the signal or data is a first direction sent from a site to the UE of a cell, and "uplink" is configured to indicate that the transmission direction of the signals or data is a second direction sent from the UE of the cell to the site. For example, a "downlink signal" indicates that the transmission direction of the signal is the first direction. In addition, in the embodiments of the disclosure, the term "and/or" is merely an association relationship describing related objects, which means that there may be three relationships. Specifically, A and/or B may indicate three cases: A exists alone, A and B exist simultaneously, and B exists alone. In addition, the character "/" in this paper generally indicates that the related objects are in an "or" relationship.

The wireless communication method provided in the embodiments of the disclosure is described in detail above from the perspective of the terminal device with reference to FIG. 6. The wireless communication method provided in the embodiments of the disclosure is described in detail below from the perspective of a communication device with reference to FIG. 9.

FIG. 9 is a schematic flowchart of a wireless communication method 300 according to an embodiment of the disclosure. The method 300 may be executed by a communication device, for example, the network device shown in FIG. 1.

As shown in FIG. 9, the method 300 may include the following steps.

At S310, scheduling information or a backoff parameter is sent based on a first type and a second type or based on a first terminal group and a second terminal group, where the scheduling information or the backoff parameter is used for a terminal device to send a backscatter signal based on a transmission resource, the backoff parameter or a time unit corresponding to a type or terminal group to which the terminal device belongs.

In some embodiments, at least one of the first type or the first terminal group includes an energy-constrained terminal device; and at least one of the second type or the second terminal group includes terminal devices other than the energy-constrained terminal device.

In some embodiments, a transmission resource corresponding to the first type is different from a transmission resource corresponding to the second type; and a transmission resource corresponding to the first terminal group is different from a transmission resource corresponding to the second terminal group.

In some embodiments, the transmission resource includes at least one of a scheduling resource or a scheduling-free resource.

In some embodiments, S310 may include the following operation.

Scheduling signaling is sent, where the scheduling signaling is used for indicating the transmission resource corresponding to the first type or the first terminal group, or the scheduling signaling is used for indicating the transmission resource corresponding to the second type or the second terminal group.

In some embodiments, if a value of an information field in the scheduling signaling is a first numerical value, the scheduling signaling is used for indicating the transmission resource corresponding to the first type or the first terminal group; and if the value of the information field is a second numerical value, the scheduling signaling is used for indicating the transmission resource corresponding to the second type or the second terminal group.

In some embodiments, if a sequence used by the scheduling signaling is a first sequence, the scheduling signaling is used for indicating the transmission resource corresponding to the first type or the first terminal group; and if the sequence used by the scheduling signaling is a second sequence, the scheduling signaling is used for indicating the transmission resource corresponding to the second type or the second terminal group.

In some embodiments, the sequence used by the scheduling signaling includes a scrambling code sequence, CRC or a C-RNTI.

In some embodiments, if a length of the scheduling signaling is a first length, the scheduling signaling is used for indicating the transmission resource corresponding to the first type or the first terminal group; and if the length of the scheduling signaling is a second length, the scheduling signaling is used for indicating the transmission resource corresponding to the second type or the second terminal group.

In some embodiments, if a frequency position for transmitting the scheduling signaling is a first frequency position, the scheduling signaling is used for indicating the transmission resource corresponding to the first type or the first terminal group; and if the frequency position for transmitting the scheduling signaling is a second frequency position, the scheduling signaling is used for indicating the transmission resource corresponding to the second type or the second terminal group.

In some embodiments, S310 may include the following operation.

At least one of the following is sent: a backoff parameter corresponding to the first type, a backoff parameter corresponding to the second type, the backoff parameter corresponding to the second type, or a backoff parameter corresponding to the second terminal group.

In some embodiments, the backoff parameter corresponding to the first type is different from the backoff parameter corresponding to the second type; and the backoff parameter corresponding to the first terminal group is different from the backoff parameter corresponding to the second terminal group.

In some embodiments, the backoff parameter corresponding to the first type is less than the backoff parameter corresponding to the second type; and the backoff parameter corresponding to the first terminal group is less than the backoff parameter corresponding to the second terminal group.

In some embodiments, S310 may include the following operations.

Scheduling signaling for scheduling the transmission resource corresponding to the first type or the first terminal group is sent on a time unit corresponding to the first type or the first terminal group.

Scheduling signaling for scheduling the transmission resource corresponding to the second type or the second terminal group is sent on a time unit corresponding to the second type or the second terminal group.

In some embodiments, the method 300 may further include the following operation.

Indication information is sent, where the indication information is used for indicating the time unit corresponding to the type or terminal group to which the terminal device belongs.

In some embodiments, the indication information is used for indicating a time position of the time unit corresponding to the type or terminal group to which the terminal device belongs; or the indication information is used for indicating a time difference between the time unit corresponding to the type or terminal group to which the terminal device belongs and a time unit where the indication information is located; or the indication information is used for indicating distribution information of the time unit corresponding to the type or terminal group to which the terminal device belongs.

In some embodiments, the distribution information includes at least one of a period of the time unit or a time position of a next time unit.

In some embodiments, the indication information is sent in a periodic or non-periodic manner.

In some embodiments, the indication information is carried in at least one of the following: scheduling signaling of terminal devices other than the terminal device, public signaling, or system information.

It should be understood that, for steps in the method 300, refer to corresponding steps in the method 200. For simplicity, elaborations are omitted herein.

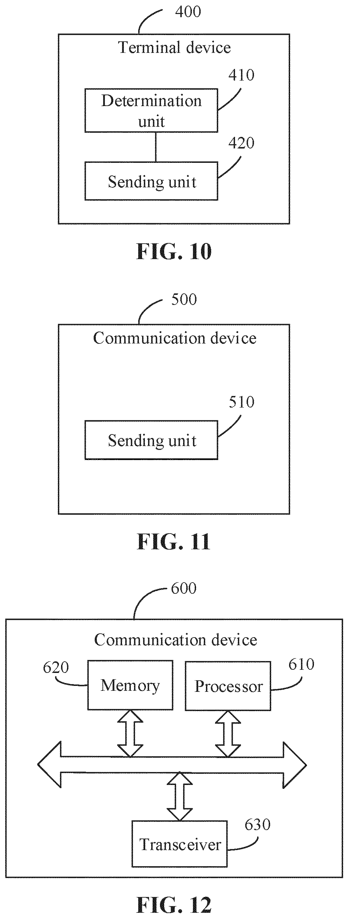

The method embodiments of the disclosure are described in detail above in combination with FIG. 1 to FIG. 9. The apparatus embodiments of the disclosure are described in detail below in combination with FIG. 10 to FIG. 13.

FIG. 10 is a schematic block diagram of a terminal device 400 according to an embodiment of the disclosure.

As shown in FIG. 10, the terminal device 400 may include a determination unit and a sending unit.

The determination unit 410 is configured to determine a type or terminal group to which a terminal device belongs.

The sending unit 420 is configured to send a backscatter signal based on a transmission resource, a backoff parameter or a time unit corresponding to the type or terminal group to which the terminal device belongs.

In some embodiments, the type to which the terminal device belongs includes a first type and a second type; the terminal group to which the terminal device belongs includes a first terminal group and a second terminal group; at least one of the first type or the first terminal group includes an energy-constrained terminal device; and at least one of the second type or the second terminal group includes terminal devices other than the energy-constrained terminal device.

In some embodiments, the type to which the terminal device belongs includes the first type and the second type; the terminal group to which the terminal device belongs includes the first terminal group and the second terminal group; a transmission resource corresponding to the first type is different from a transmission resource corresponding to the second type; and a transmission resource corresponding to the first terminal group is different from a transmission resource corresponding to the second terminal group.

In some embodiments, the transmission resource includes at least one of a scheduling resource or a scheduling-free resource.

In some embodiments, the sending unit 420 is specifically configured to perform the following operations.

Scheduling signaling for scheduling the transmission resource corresponding to the type or terminal group to which the terminal device belongs is received, where the scheduling signaling is used for indicating the transmission resource corresponding to the first type or the first terminal group, or the scheduling signaling is used for indicating the transmission resource corresponding to the second type or the second terminal group.

The backscatter signal is sent based on the transmission resource scheduled by the scheduling signaling.

In some embodiments, if a value of an information field in the scheduling signaling is a first numerical value, the scheduling signaling is used for indicating the transmission resource corresponding to the first type or the first terminal group; and if the value of the information field is a second numerical value, the scheduling signaling is used for indicating the transmission resource corresponding to the second type or the second terminal group.

In some embodiments, if a sequence used by the scheduling signaling is a first sequence, the scheduling signaling is used for indicating the transmission resource corresponding to the first type or the first terminal group; and if the sequence used by the scheduling signaling is a second sequence, the scheduling signaling is used for indicating the transmission resource corresponding to the second type or the second terminal group.

In some embodiments, the sequence used by the scheduling signaling includes a scrambling code sequence, CRC or a C-RNTI.

In some embodiments, if a length of the scheduling signaling is a first length, the scheduling signaling is used for indicating the transmission resource corresponding to the first type or the first terminal group; and if the length of the scheduling signaling is a second length, the scheduling signaling is used for indicating the transmission resource corresponding to the second type or the second terminal group.

In some embodiments, if a frequency position for transmitting the scheduling signaling is a first frequency position, the scheduling signaling is used for indicating the transmission resource corresponding to the first type or the first terminal group; and if the frequency position for transmitting the scheduling signaling is a second frequency position, the scheduling signaling is used for indicating the transmission resource corresponding to the second type or the second terminal group.

In some embodiments, the sending unit 420 is specifically configured to perform the following operations.

The backoff parameter corresponding to the type or terminal group to which the terminal device belongs is acquired.

The backscatter signal is sent based on the transmission resource contended according to the backoff parameter corresponding to the type or terminal group to which the terminal device belongs.

In some embodiments, the type to which the terminal device belongs includes a first type and a second type; the terminal group to which the terminal device belongs includes a first terminal group and a second terminal group; the backoff parameter corresponding to the first type is different from the backoff parameter corresponding to the second type; and the backoff parameter corresponding to the first terminal group is different from the backoff parameter corresponding to the second terminal group.

In some embodiments, the backoff parameter corresponding to the first type is less than the backoff parameter corresponding to the second type; and the backoff parameter corresponding to the first terminal group is less than the backoff parameter corresponding to the second terminal group.

In some embodiments, the sending unit 420 is specifically configured to perform the following operations.

Scheduling signaling of the terminal device is received on the time unit corresponding to the type or terminal group to which the terminal device belongs.

The backscatter signal is sent based on the transmission resource scheduled by the scheduling signaling.

In some embodiments, the sending unit 420 is further configured to perform the following operation.

Indication information is received, where the indication information is used for indicating the time unit corresponding to the type or terminal group to which the terminal device belongs.

In some embodiments, the indication information is used for indicating a time position of the time unit corresponding to the type or terminal group to which the terminal device belongs; or the indication information is used for indicating a time difference between the time unit corresponding to the type or terminal group to which the terminal device belongs and a time unit where the indication information is located; or the indication information is used for indicating distribution information of the time unit corresponding to the type or terminal group to which the terminal device belongs.

In some embodiments, the distribution information includes at least one of a period of the time unit or a time position of a next time unit.

In some embodiments, the sending unit 420 is specifically configured to perform the following operation.

The indication information is received in a periodic or non-periodic manner.

In some embodiments, the indication information is carried in at least one of the following: scheduling signaling of terminal devices other than the terminal device, public signaling, or system information.

In some embodiments, the determination unit 410 is specifically configured to perform the following operation.

The type or terminal group to which the terminal device belongs is determined based on an energy harvesting speed of the terminal device.

In some embodiments, the determination unit 410 is specifically configured to perform the following operation.

If the energy harvesting speed of the terminal device is less than or equal to a first threshold, the type to which the terminal device belongs is determined as the first type, or the terminal group to which the terminal device belongs is determined as the first terminal group; otherwise, the type to which the terminal device belongs is determined as the second type, or the terminal group to which the terminal device belongs is determined as the second terminal group.

In some embodiments, the determination unit 410 is specifically configured to perform the following operation.

The type or terminal group to which the terminal device belongs is determined based on signal strength measured by the terminal device.

In some embodiments, the determination unit 410 is specifically configured to perform the following operation.

If the signal strength or a signal voltage measured by the terminal device is less than or equal to a second threshold, the type to which the terminal device belongs is determined as the first type, or the terminal group to which the terminal device belongs is determined as the first terminal group; otherwise, the type to which the terminal device belongs is determined as the second type, or the terminal group to which the terminal device belongs is determined as the second terminal group.

In some embodiments, the determination unit 410 is specifically configured to perform the following operation.

The type or terminal group to which the terminal device belongs is determined based on deployment of a network device.

In some embodiments, the determination unit 410 is specifically configured to perform the following operation.

If a distance between the terminal device and the network device is greater than or equal to a third threshold, the type to which the terminal device belongs is determined as the first type, or the terminal group to which the terminal device belongs is determined as the first terminal group; otherwise, the type to which the terminal device belongs is determined as the second type, or the terminal group to which the terminal device belongs is determined as the second terminal group.

In some embodiments, the determination unit 410 is specifically configured to perform the following operations.

Storage information of the terminal device is acquired.

A type included in the storage information is determined as the type or terminal group to which the terminal device belongs.

In some embodiments, the storage information is carried in at least one of the following: an internal storage, an SIM, or an eSIM.

It should be understood that, the apparatus embodiments may mutually correspond to the method embodiments, and for similar descriptions, refer to the method embodiments. Specifically, the terminal device 400 shown in FIG. 10 may correspond to the corresponding subject in the method 200 of embodiments of the disclosure. The above and other operations and/or functions of each unit in the terminal device 400 are to implement corresponding processes in the methods in FIG. 6. For the sake of brevity, details are not described herein again.

FIG. 11 is a schematic block diagram of a communication device 500 according to an embodiment of the disclosure.

As shown in FIG. 11, the communication device 500 may include a sending unit.

The sending unit 510 is configured to send scheduling information or a backoff parameter based on a first type and a second type or based on a first terminal group and a second terminal group, where the scheduling information or the backoff parameter is used for a terminal device to send a backscatter signal based on a transmission resource, the backoff parameter or a time unit corresponding to a type or terminal group to which the terminal device belongs.

In some embodiments, at least one of the first type or the first terminal group includes an energy-constrained terminal device; and at least one of the second type or the second terminal group includes terminal devices other than the energy-constrained terminal device.

In some embodiments, a transmission resource corresponding to the first type is different from a transmission resource corresponding to the second type; and a transmission resource corresponding to the first terminal group is different from a transmission resource corresponding to the second terminal group.

In some embodiments, the transmission resource includes at least one of a scheduling resource or a scheduling-free resource.

In some embodiments, the sending unit 510 is specifically configured to perform the following operation.

Scheduling signaling is sent, where the scheduling signaling is used for indicating the transmission resource corresponding to the first type or the first terminal group, or the scheduling signaling is used for indicating the transmission resource corresponding to the second type or the second terminal group.

In some embodiments, if a value of an information field in the scheduling signaling is a first numerical value, the scheduling signaling is used for indicating the transmission resource corresponding to the first type or the first terminal group; and if the value of the information field is a second numerical value, the scheduling signaling is used for indicating the transmission resource corresponding to the second type or the second terminal group.

In some embodiments, if a sequence used by the scheduling signaling is a first sequence, the scheduling signaling is used for indicating the transmission resource corresponding to the first type or the first terminal group; and if the sequence used by the scheduling signaling is a second sequence, the scheduling signaling is used for indicating the transmission resource corresponding to the second type or the second terminal group.

In some embodiments, the sequence used by the scheduling signaling includes a scrambling code sequence, CRC or a C-RNTI.

In some embodiments, if a length of the scheduling signaling is a first length, the scheduling signaling is used for indicating the transmission resource corresponding to the first type or the first terminal group; and if the length of the scheduling signaling is a second length, the scheduling signaling is used for indicating the transmission resource corresponding to the second type or the second terminal group.

In some embodiments, if a frequency position for transmitting the scheduling signaling is a first frequency position, the scheduling signaling is used for indicating the transmission resource corresponding to the first type or the first terminal group; and if the frequency position for transmitting the scheduling signaling is a second frequency position, the scheduling signaling is used for indicating the transmission resource corresponding to the second type or the second terminal group.

In some embodiments, the sending unit 510 is specifically configured to perform the following operation.

At least one of the following is sent: a backoff parameter corresponding to the first type, a backoff parameter corresponding to the second type, the backoff parameter corresponding to the second type, or a backoff parameter corresponding to the second terminal group.

In some embodiments, the backoff parameter corresponding to the first type is different from the backoff parameter corresponding to the second type; and the backoff parameter corresponding to the first terminal group is different from the backoff parameter corresponding to the second terminal group.

In some embodiments, the backoff parameter corresponding to the first type is less than the backoff parameter corresponding to the second type; and the backoff parameter corresponding to the first terminal group is less than the backoff parameter corresponding to the second terminal group.

In some embodiments, the sending unit 510 is specifically configured to perform the following operations.

Scheduling signaling for scheduling the transmission resource corresponding to the first type or the first terminal group is sent on a time unit corresponding to the first type or the first terminal group.

Scheduling signaling for scheduling the transmission resource corresponding to the second type or the second terminal group is sent on the time unit corresponding to the second type or the second terminal group.

In some embodiments, the sending unit 510 is further configured to perform the following operation.

Indication information is sent, where the indication information is used for indicating the time unit corresponding to the type or terminal group to which the terminal device belongs.

In some embodiments, the indication information is used for indicating a time position of the time unit corresponding to the type or terminal group to which the terminal device belongs; or the indication information is used for indicating a time difference between the time unit corresponding to the type or terminal group to which the terminal device belongs and a time unit where the indication information is located; or the indication information is used for indicating distribution information of the time unit corresponding to the type or terminal group to which the terminal device belongs.

In some embodiments, the distribution information includes at least one of a period of the time unit or a time position of a next time unit.

In some embodiments, the sending unit 510 is specifically configured to perform the following operation.

The indication information is sent in a periodic or non-periodic manner.

In some embodiments, the indication information is carried in at least one of the following: scheduling signaling of terminal devices other than the terminal device, public signaling, or system information.

It should be understood that, the apparatus embodiments may mutually correspond to the method embodiments, and for similar descriptions, refer to the method embodiments. Specifically, the communication device 500 shown in FIG. 11 may correspond to the corresponding subject in the method 300 of embodiments of the disclosure. The above and other operations and/or functions of each unit in the communication device 500 are to implement corresponding processes in the methods in FIG. 9. For the sake of brevity, details are not described herein again.

The communication device in the embodiments of the disclosure is described above from the perspective of a functional module with reference to the drawings. It should be understood that, the functional module can be implemented in the form of hardware, or may be implemented by means of an instruction in the form of software, or may be implemented by means of a combination of hardware and software modules. Specifically, the steps of the method embodiments in the embodiments of the disclosure may be completed by means of an integrated logic circuit of hardware in a processor and/or an instruction in the form of software. In combination with the method disclosed in the embodiments of the disclosure, the steps may be directly implemented by a hardware processor, or may be performed by a combination of hardware and software modules in the decoding processor. Optionally, the software module may be located in a mature storage medium in the field such as a Random Access Memory (RAM), a flash memory, a Read-Only Memory (ROM), a Programmable ROM (PROM) or Electrically Erasable PROM (EEPROM), and a register. The storage medium is located in a memory, and the processor reads information in the memory, and completes the steps in the method embodiments in combination with hardware.

For example, the above involved determination unit 410 and the above involved determination unit 510 may be implemented through the processor; and the above involved sending unit 410 and the receiving unit 510 may be implemented through a transceiver.

FIG. 12 is a schematic structural diagram of a communication device 600 according to an embodiment of the disclosure.

As shown in FIG. 12, the communication device 600 may include a processor 610.

The processor 610 may invoke and run the computer program in the memory to implement the method in the embodiments of the disclosure.

As shown in FIG. 12, the communication device 600 may further include the memory 620.

The memory 620 may be configured to store indication information, and may further be configured to store a code, an instruction and the like executed by the processor 610. The processor 610 may invoke and run the computer program in the memory 620 to implement the method in the embodiments of the disclosure. The memory 620 may be an independent device independent of the processor 610 and may also be integrated into the processor 610.

As shown in FIG. 12, the communication device 600 may further include a transceiver 630.

The processor 610 may control the transceiver 630 to communicate with another device, specifically transmitting information or data to another device or receiving information or data transmitted by another device. The transceiver 630 may include a transmitter and a receiver. The transceiver 630 may further include antennae, and there may be one or more antennae.

It should be understood that, the assemblies in the communication device 600 are connected to each other by means of a bus system. The bus system, in addition to including a data bus, further includes a power bus, a control bus and a state signal bus.

It should also be understood that, the communication device 600 may be the terminal device in the embodiments of the disclosure. The communication device 600 may implement corresponding processes implemented by the terminal device in each method of the embodiments of the disclosure. That is to say, the communication device 600 in the embodiments of the disclosure may correspond to the terminal device 400 in the embodiments of the disclosure, and may correspond to the corresponding subject for executing the method 200 in the embodiments of the disclosure. For simplicity, details are not described herein again. Similarly, the communication device 600 may be a network device in this embodiment of the disclosure. The communication device 600 may implement corresponding flows implemented by the network device in each method of the embodiments of the disclosure. That is to say, the communication device 600 in the embodiments of the disclosure may correspond to the communication device 500 in the embodiments of the disclosure, and may correspond to the corresponding subject for executing the method 300 in the embodiments of the disclosure. For the sake of brevity, details are not described herein again.

In addition, an embodiment of the disclosure further provides a chip.

For example, the chip may be an integrated circuit chip, and has a signal processing capacity. Each method, step and logical block diagram disclosed in the embodiments of the disclosure may be implemented or executed. The chip may further be called a system-level chip, a system chip, a chip system, or a system on chip. Optionally, the chip may be applied to various communication devices, so that the communication device having the chip mounted can execute each method, step and logical block diagram disclosed in the embodiments of the disclosure.

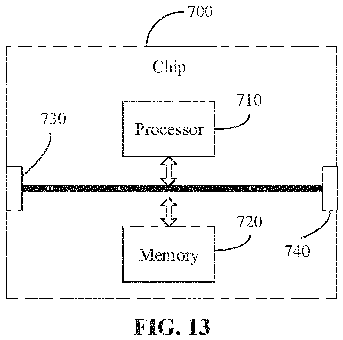

FIG. 13 is a schematic structural diagram of a chip 700 according to an embodiment of the disclosure.

As shown in FIG. 13, the chip 700 may include a processor 710.

The processor 710 may invoke and run the computer program in the memory to implement the method in the embodiments of the disclosure.

As shown in FIG. 13, the chip 700 may further include the memory 720.

The processor 710 may invoke and run the computer program in the memory 720 to implement the method in the embodiments of the disclosure. The memory 720 may be configured to store indication information, and may further be configured to store a code, an instruction and the like executed by the processor 710. The memory 720 may be an independent device independent of the processor 710 and may also be integrated into the processor 710.

As shown in FIG. 13, the chip 700 may further include an input interface 730.

The processor 710 may control the input interface 730 to communicate with another device or chip, specifically acquiring information or data transmitted by another device or chip.

As shown in FIG. 13, the chip 700 may further include an output interface 740.

The processor 710 may control the output interface 740 to communicate with another device or chip, specifically outputting information or data transmitted by another device or chip.

It should be understood that, the chip 700 is applicable to the network device in the embodiments of the disclosure, and the chip may implement corresponding flows implemented by the network device in each method of the embodiments of the disclosure, or may implement corresponding processes implemented by the terminal device in each method of the embodiments of the disclosure. For the sake of brevity, details are not described herein again.

It should also be understood that, the assemblies in the chip 700 are connected to each other by means of a bus system. The bus system, in addition to including a data bus, further includes a power bus, a control bus and a state signal bus.

The processor mentioned above may include, but is not limited to:
a general processor, a Digital Signal Processor (DSP), an Application Specific Integrated Circuit (ASIC), a Field-Programmable Gate Array (FPGA) or other programmable logic devices, discrete gate or transistor logic devices, and discrete hardware components.

The processor may be configured to implement or execute each method, step and logical block diagram disclosed in the embodiments of the disclosure. In combination with the method disclosed in the embodiments of the disclosure, the steps may be directly implemented by a hardware processor, or may be performed by a combination of hardware and software modules in the decoding processor. The software module may be located in a mature storage medium in the field such as a Random Access Memory (RAM), a flash memory, a Read-Only Memory (ROM), a Programmable ROM (PROM) or Erasable PROM (EPROM), and a register. The storage medium is located in a memory, and the processor reads information in the memory, and completes the steps of the method in combination with hardware.

The memory mentioned above includes, but is not limited to: a volatile memory or a non-volatile memory. The non-volatile memory may be an ROM, a PROM, an Erasable PROM (EPROM), an EEPROM or a flash memory. The volatile memory may be an RAM, and is used as an external high-speed cache. It is exemplarily but unlimitedly described that RAMs in various forms may be adopted, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM) and a Direct Rambus RAM (DR RAM).

It is to be noted that, the memory described here is intended to include memories of these and any other proper types.

An embodiment of the disclosure further provides a computer-readable storage medium, configured to store a computer program. The computer-readable storage medium stores one or more programs. The one or more programs include instructions. The instructions, when being executed by a portable electronic device including a plurality of disclosure applications, enable the portable electronic device to perform the wireless communication method provided in the disclosure. Optionally, the computer-readable storage medium is applicable to a network device in the embodiments of the disclosure, and the computer program causes a computer to perform corresponding flows implemented by the network device in each method of the embodiments of the disclosure. For simplicity, elaborations are omitted herein. Optionally, the computer-readable storage medium is applicable to a mobile terminal/terminal device in the embodiments of the disclosure, and the computer program causes a computer to perform corresponding flows implemented by the mobile terminal/terminal device in each method of the embodiments of the disclosure. For simplicity, elaborations are omitted herein.

An embodiment of the disclosure further provides a computer program product, including a computer program. Optionally, the computer program product is applicable to a network device in the embodiments of the disclosure, and the computer program causes a computer to perform corresponding flows implemented by the network device in each method of the embodiments of the disclosure. For simplicity, elaborations are omitted herein. Optionally, the computer program product is applicable to a mobile terminal/terminal device in the embodiments of the disclosure, and the computer program causes a computer to perform corresponding flows implemented by the mobile terminal/terminal device in each method of the embodiments of the disclosure. For simplicity, elaborations are omitted herein.

An embodiment of the disclosure further provides a computer program. When the computer program is executed by a computer, the computer is enabled to perform the wireless communication method provided in the disclosure. Optionally, the computer program is applicable to a network device in the embodiments of the disclosure. When the computer program is run on a computer, the computer executes corresponding flows implemented by the network device in each method of the embodiments of the disclosure. For simplicity, elaborations are omitted herein. Optionally, the computer program is applicable to a mobile terminal/terminal device in the embodiments of the disclosure. When the computer program is run on a computer, the computer executes corresponding flows implemented by the mobile terminal/terminal device in each method of the embodiments of the disclosure. For simplicity, elaborations are omitted herein.

The embodiments of the disclosure further provide a communication system, which may include the above terminal device and network device to form a communication system 100 shown in FIG. 1. For simplicity, elaborations are omitted herein. It is to be noted that the terms "system" and the like herein may also be referred to as "network management architecture" or "network system" and the like.

It is also to be understood that the terms used in the embodiments and the appended claims of the disclosure are only for describing the specific embodiments and are not intended to limit the embodiments of the disclosure. For example, singular forms "a/an", "said", "above" and "the" used in the embodiments and appended claims of the disclosure are also intended to include plural forms unless other meanings are clearly expressed in the context.

Those of skill in the art may realize that the units and algorithm steps of each example described in combination with the embodiments disclosed in the disclosure may be implemented by electronic hardware or a combination of computer software and the electronic hardware. Whether these functions are executed in a hardware or software manner depends on specific applications and design constraints of the technical solutions. Professionals may realize the described functions for each specific application by use of different methods, but such implementation shall fall within the scope of the embodiments of the disclosure. If the function is implemented in the form of the software functional unit and sold or used as an independent product, it can be stored in the computer readable storage medium. Based on this understanding, the technical solutions of the embodiments of the disclosure essentially or the parts that contribute to the prior art, or part of the technical solutions can be embodied in the form of a software product. The computer software product is stored in a storage medium, including a plurality of instructions for causing a computer device (which may be a personal computer, a server, or a network device, and the like) to perform all or part of the steps of the method described in the embodiments of the disclosure. The foregoing storage medium includes a USB flash disk, a mobile hard disk drive, a Read-Only Memory (ROM), a Random Access Memory (RAM), and various media that can store program codes, such as a magnetic disk or an optical disk.

Those skilled in the art may further learn about that specific working processes of the system, device, and units described above may refer to the corresponding processes in the above method embodiments and will not be elaborated herein for ease and briefness of description. In several embodiments provided by the disclosure, it is to be understood that the disclosed system, apparatus and method may be implemented in other ways. For example, the division of the units or modules or assemblies is merely a logical function division, and there may be other divisions in actual implementation. For example, a plurality of units or modules or assemblies may be combined or integrated into another system, or some units or modules or assemblies can be ignored, or not implemented. For another example, the units/modules/assemblies described as separate/display components may or may not be physically separated, that is, may be located in one place, or may be distributed on the plurality of network units. Part or all of the units/modules/assemblies may be selected according to actual requirements to achieve the purposes of the embodiments of the disclosure. Finally, it is to be noted that, the displayed or discussed mutual coupling or direct coupling or communication connection may be indirect coupling or communication connection through some interfaces, devices or units, and may be in electrical, mechanical or other forms.

The above are only the specific implementations of the embodiments of the disclosure and not intended to limit the scope of protection of the embodiments of the disclosure. Any variations or replacements apparent to those skilled in the art within the technical scope disclosed by the embodiments of the disclosure shall fall within the scope of protection of the embodiments of the disclosure. Therefore, the scope of protection of the embodiments of the disclosure shall be subject to the scope of protection of the claims.

## Claims

1. A wireless communication method, comprising:
determining a type or terminal group to which a terminal device belongs; and
sending a backscatter signal based on a transmission resource, a backoff parameter or a time unit corresponding to the type or terminal group to which the terminal device belongs.

2. The method of claim 1, wherein the type to which the terminal device belongs comprises a first type and a second type; the terminal group to which the terminal device belongs comprises a first terminal group and a second terminal group; at least one of the first type or the first terminal group comprises an energy-constrained terminal device; and at least one of the second type or the second terminal group comprises terminal devices other than the energy-constrained terminal device.

3. The method of claim 1 or 2, wherein the type to which the terminal device belongs comprises the first type and the second type; the terminal group to which the terminal device belongs comprises the first terminal group and the second terminal group; a transmission resource corresponding to the first type is different from a transmission resource corresponding to the second type; and a transmission resource corresponding to the first terminal group is different from a transmission resource corresponding to the second terminal group.

4. The method of claim 3, wherein the transmission resource comprises at least one of a scheduling resource or a scheduling-free resource.

5. The method of any one of claims 1 to 4, wherein sending the backscatter signal based on the transmission resource, the backoff parameter or the time unit corresponding to the type or terminal group to which the terminal device belongs comprises:
receiving scheduling signaling for scheduling the transmission resource corresponding to the type or terminal group to which the terminal device belongs, wherein the scheduling signaling is used for indicating the transmission resource corresponding to the first type or the first terminal group, or the scheduling signaling is used for indicating the transmission resource corresponding to the second type or the second terminal group; and
sending the backscatter signal based on the transmission resource scheduled by the scheduling signaling.

6. The method of claim 5, wherein if a value of an information field in the scheduling signaling is a first numerical value, the scheduling signaling is used for indicating the transmission resource corresponding to the first type or the first terminal group; and if the value of the information field is a second numerical value, the scheduling signaling is used for indicating the transmission resource corresponding to the second type or the second terminal group.

7. The method of claim 5, wherein if a sequence used by the scheduling signaling is a first sequence, the scheduling signaling is used for indicating the transmission resource corresponding to the first type or the first terminal group; and if the sequence used by the scheduling signaling is a second sequence, the scheduling signaling is used for indicating the transmission resource corresponding to the second type or the second terminal group.

8. The method of claim 7, wherein the sequence used by the scheduling signaling comprises a scrambling code sequence, Cyclic Redundancy Check, CRC, or a Cell Radio Network Temporary Identifier, C-RNTI.

9. The method of claim 5, wherein if a length of the scheduling signaling is a first length, the scheduling signaling is used for indicating the transmission resource corresponding to the first type or the first terminal group; and if the length of the scheduling signaling is a second length, the scheduling signaling is used for indicating the transmission resource corresponding to the second type or the second terminal group.

10. The method of claim 5, wherein if a frequency position for transmitting the scheduling signaling is a first frequency position, the scheduling signaling is used for indicating the transmission resource corresponding to the first type or the first terminal group; and if the frequency position for transmitting the scheduling signaling is a second frequency position, the scheduling signaling is used for indicating the transmission resource corresponding to the second type or the second terminal group.

11. The method of any one of claims 1 to 4, wherein sending the backscatter signal based on the transmission resource, the backoff parameter or the time unit corresponding to the type or terminal group to which the terminal device belongs comprises:
acquiring the backoff parameter corresponding to the type or terminal group to which the terminal device belongs; and
sending the backscatter signal based on the transmission resource contended according to the backoff parameter corresponding to the type or terminal group to which the terminal device belongs.

12. The method of claim 11, wherein the type to which the terminal device belongs comprises a first type and a second type; the terminal group to which the terminal device belongs comprises a first terminal group and a second terminal group; the backoff parameter corresponding to the first type is different from the backoff parameter corresponding to the second type; and the backoff parameter corresponding to the first terminal group is different from the backoff parameter corresponding to the second terminal group.

13. The method of claim 12, wherein the backoff parameter corresponding to the first type is less than the backoff parameter corresponding to the second type; and the backoff parameter corresponding to the first terminal group is less than the backoff parameter corresponding to the second terminal group.

14. The method of any one of claims 1 to 4, wherein sending the backscatter signal based on the transmission resource, the backoff parameter or the time unit corresponding to the type or terminal group to which the terminal device belongs comprises:
receiving scheduling signaling of the terminal device on the time unit corresponding to the type or terminal group to which the terminal device belongs; and
sending the backscatter signal based on the transmission resource scheduled by the scheduling signaling.

15. The method of claim 14, further comprising:
receiving indication information, wherein the indication information is used for indicating the time unit corresponding to the type or terminal group to which the terminal device belongs.

16. The method of claim 15, wherein the indication information is used for indicating a time position of the time unit corresponding to the type or terminal group to which the terminal device belongs; or the indication information is used for indicating a time difference between the time unit corresponding to the type or terminal group to which the terminal device belongs and a time unit where the indication information is located; or the indication information is used for indicating distribution information of the time unit corresponding to the type or terminal group to which the terminal device belongs.

17. The method of claim 16, wherein the distribution information comprises at least one of a period of the time unit or a time position of a next time unit.

18. The method of any one of claims 15 to 17, wherein receiving the indication information comprises:
receiving the indication information in a periodic or non-periodic manner.

19. The method of any one of claims 15 to 18, wherein the indication information is carried in at least one of the following:
scheduling signaling of terminal devices other than the terminal device, public signaling, or system information.

20. The method of any one of claims 1 to 19, wherein determining the type or terminal group to which the terminal device belongs comprises:
determining, based on an energy harvesting speed of the terminal device, the type or terminal group to which the terminal device belongs.

21. The method of claim 20, wherein determining, based on the energy harvesting speed of the terminal device, the type or terminal group to which the terminal device belongs comprises:
if the energy harvesting speed of the terminal device is less than or equal to a first threshold, determining, as the first type, the type to which the terminal device belongs or determining, as the first terminal group, the terminal group to which the terminal device belongs; otherwise, determining, as the second type, the type to which the terminal device belongs or determining, as the second terminal group, the terminal group to which the terminal device belongs.

22. The method of any one of claims 1 to 19, wherein determining the type or terminal group to which the terminal device belongs comprises:
determining, based on signal strength measured by the terminal device, the type or terminal group to which the terminal device belongs.

23. The method of claim 22, wherein determining, based on the signal strength measured by the terminal device, the type or terminal group to which the terminal device belongs comprises:
if the signal strength or a signal voltage measured by the terminal device is less than or equal to a second threshold, determining, as the first type, the type to which the terminal device belongs or determining, as the first terminal group, the terminal group to which the terminal device belongs; otherwise, determining, as the second type, the type to which the terminal device belongs or determining, as the second terminal group, the terminal group to which the terminal device belongs.

24. The method of any one of claims 1 to 19, wherein determining the type or terminal group to which the terminal device belongs comprises:
determining, based on deployment of a network device, the type or terminal group to which the terminal device belongs.

25. The method of claim 24, wherein determining, based on the deployment of the network device, the type or terminal group to which the terminal device belongs comprises:
if a distance between the terminal device and the network device is greater than or equal to a third threshold, determining, as the first type, the type to which the terminal device belongs or determining, as the first terminal group, the terminal group to which the terminal device belongs; otherwise, determining, as the second type, the type to which the terminal device belongs or determining, as the second terminal group, the terminal group to which the terminal device belongs.

26. The method of any one of claims 1 to 19, wherein determining the type or terminal group to which the terminal device belongs comprises:
acquiring storage information of the terminal device; and
determining a type comprised in the storage information as the type or terminal group to which the terminal device belongs.

27. The method of claim 26, wherein the storage information is stored in at least one of the following:
an internal storage, a Subscriber Identity Module, SIM, or an embedded Subscriber Identity Module, eSIM.

28. A wireless communication method, comprising:
sending scheduling information or a backoff parameter based on a first type and a second type or based on a first terminal group and a second terminal group, wherein the scheduling information or the backoff parameter is used for a terminal device to send a backscatter signal based on a transmission resource, the backoff parameter or a time unit corresponding to a type or terminal group to which the terminal device belongs.

29. The method of claim 28, wherein at least one of the first type or the first terminal group comprises an energy-constrained terminal device; and at least one of the second type or the second terminal group comprises terminal devices other than the energy-constrained terminal device.

30. The method of claim 28 or 29, wherein a transmission resource corresponding to the first type is different from a transmission resource corresponding to the second type; and a transmission resource corresponding to the first terminal group is different from a transmission resource corresponding to the second terminal group.

31. The method of claim 30, wherein the transmission resource comprises at least one of a scheduling resource or a scheduling-free resource.

32. The method of any one of claims 28 to 31, wherein sending the scheduling information or the backoff parameter based on the first type and the second type or based on the first terminal group and the second terminal group comprises:
sending scheduling signaling, wherein the scheduling signaling is used for indicating the transmission resource corresponding to the first type or the first terminal group, or the scheduling signaling is used for indicating the transmission resource corresponding to the second type or the second terminal group.

33. The method of claim 32, wherein if a value of an information field in the scheduling signaling is a first numerical value, the scheduling signaling is used for indicating the transmission resource corresponding to the first type or the first terminal group; and if the value of the information field is a second numerical value, the scheduling signaling is used for indicating the transmission resource corresponding to the second type or the second terminal group.

34. The method of claim 32, wherein if a sequence used by the scheduling signaling is a first sequence, the scheduling signaling is used for indicating the transmission resource corresponding to the first type or the first terminal group; and if the sequence used by the scheduling signaling is a second sequence, the scheduling signaling is used for indicating the transmission resource corresponding to the second type or the second terminal group.

35. The method of claim 34, wherein the sequence used by the scheduling signaling comprises a scrambling code sequence, Cyclic Redundancy Check, CRC, or a Cell Radio Network Temporary Identifier, C-RNTI.

36. The method of claim 32, wherein if a length of the scheduling signaling is a first length, the scheduling signaling is used for indicating the transmission resource corresponding to the first type or the first terminal group; and if the length of the scheduling signaling is a second length, the scheduling signaling is used for indicating the transmission resource corresponding to the second type or the second terminal group.

37. The method of claim 32, wherein if a frequency position for transmitting the scheduling signaling is a first frequency position, the scheduling signaling is used for indicating the transmission resource corresponding to the first type or the first terminal group; and if the frequency position for transmitting the scheduling signaling is a second frequency position, the scheduling signaling is used for indicating the transmission resource corresponding to the second type or the second terminal group.

38. The method of any one of claims 28 to 31, wherein sending the scheduling information or the backoff parameter based on the first type and the second type or based on the first terminal group and the second terminal group comprises:
sending at least one of the following:
a backoff parameter corresponding to the first type, a backoff parameter corresponding to the second type, the backoff parameter corresponding to the second type, or a backoff parameter corresponding to the second terminal group.

39. The method of claim 38, wherein the backoff parameter corresponding to the first type is different from the backoff parameter corresponding to the second type; and the backoff parameter corresponding to the first terminal group is different from the backoff parameter corresponding to the second terminal group.

40. The method of claim 39, wherein the backoff parameter corresponding to the first type is less than the backoff parameter corresponding to the second type; and the backoff parameter corresponding to the first terminal group is less than the backoff parameter corresponding to the second terminal group.

41. The method of any one of claims 28 to 31, wherein sending the scheduling information or the backoff parameter based on the first type and the second type or based on the first terminal group and the second terminal group comprises:
sending scheduling signaling for scheduling the transmission resource corresponding to the first type or the first terminal group on a time unit corresponding to the first type or the first terminal group; and
sending scheduling signaling for scheduling the transmission resource corresponding to the second type or the second terminal group on a time unit corresponding to the second type or the second terminal group.

42. The method of claim 41, further comprising:
sending indication information, wherein the indication information is used for indicating the time unit corresponding to the type or terminal group to which the terminal device belongs.

43. The method of claim 42, wherein the indication information is used for indicating a time position of the time unit corresponding to the type or terminal group to which the terminal device belongs; or the indication information is used for indicating a time difference between the time unit corresponding to the type or terminal group to which the terminal device belongs and a time unit where the indication information is located; or the indication information is used for indicating distribution information of the time unit corresponding to the type or terminal group to which the terminal device belongs.

44. The method of claim 43, wherein the distribution information comprises at least one of a period of the time unit or a time position of a next time unit.

45. The method of any one of claims 42 to 44, wherein sending the indication information comprises:
sending the indication information in a periodic or non-periodic manner.

46. The method of any one of claims 42 to 45, wherein the indication information is carried in at least one of the following:
scheduling signaling of terminal devices other than the terminal device, public signaling, or system information.

47. A terminal device, comprising:
a determination unit, configured to determine a type or terminal group to which a terminal device belongs; and
a sending unit, configured to send a backscatter signal based on a transmission resource, a backoff parameter or a time unit corresponding to the type or terminal group to which the terminal device belongs.

48. A communication device, comprising:
a sending unit, configured to send scheduling information or a backoff parameter based on a first type and a second type or based on a first terminal group and a second terminal group, wherein the scheduling information or the backoff parameter is used for a terminal device to send a backscatter signal based on a transmission resource, the backoff parameter or a time unit corresponding to a type or terminal group to which the terminal device belongs.

49. A terminal device, comprising:
a processor and a memory, wherein the memory is configured to store a computer program; and the processor is configured to invoke and run the computer program stored in the memory, so as to perform the method of any one of claims 1 to 27.

50. A communication device, comprising:
a processor and a memory, wherein the memory is configured to store a computer program; and the processor is configured to invoke and run the computer program stored in the memory, so as to perform the method of any one of claims 28 to 46.

51. A chip, comprising:
a processor, configured to invoke and run a computer program from a memory, so as to enable a device having the chip mounted to perform the method of any one of claims 1 to 27, or the method of any one of claims 28 to 46.

52. A computer-readable storage medium, configured to store a computer program, wherein the computer program enables a computer to perform the method of any one of claims 1 to 27, or the method of any one of claims 28 to 46.

53. A computer program product, comprising computer program instructions, wherein the computer program instructions enable a computer to perform the method of any one of claims 1 to 27, or the method of any one of claims 28 to 46.

54. A computer program, enabling a computer to perform the method of any one of claims 1 to 27, or the method of any one of claims 28 to 46.
